# DEMANDE DE BREVET EUROPEEN

(11) **EP 1 350 989 A2**
(43) Date de publication de la demande: **08.10.2003**
(21) Numéro de dépôt: 03290747.9
(22) Date de dépôt: 25.03.2003
(51) Int. Cl.: F16H 37/12, F16H 27/06, B64G 1/28

(54) **Dispositif de verouillage temporaire d'un rotor, notamment d'un rotor à suspension magnétique d'un volant d'inertie pour applications spatiales**

(30) Priorité: 29.03.2002 FR 0203996
(71) Demandeur: Organisation Intergouvernementale Dite Agence Spatiale Europeenne, 75738 Paris Cedex 15 (FR)
(72) Inventeur: Blonski, Daniel, 2312 DC Leiden (NL); Seiler, René, 2343 SX Oegstgeest (NL)
(74) Mandataire: Lepercque, Jean

(57) **Abrégé**

Selon l'invention, on utilise un mécanisme à mouvement dit de Genève (3) entraîné en rotation (f) dans un sens ou un autre par un moteur électrique (8). Ce mécanisme (3) comprend une croix dite de Malte (31) tournant autour de l'axe de rotation (Δ) du rotor (6) et supportant une pièce annulaire (5). La croix de Malte (31) est couplée mécaniquement à une vis à billes (4) coaxiale à cet axe de rotation (Δ), de manière à transformer le mouvement de rotation (f) en un mouvement comprenant une composante linéaire (f'), permettant de rapprocher ou d'éloigner à volonté la pièce annulaire (5) de manière à obtenir un contact avec le rotor (6), puis un auto-blocage blocage contre une paroi fixe (70), ou au contraire sa libération par une translation en sens inverse de la pièce annulaire (5).

Application à un volant d'inertie (2) pour la commande de l'attitude d'un satellite.

## Description

L'invention concerne un dispositif de verrouillage temporaire d'un rotor, c'est-à-dire permettant un verrouillage/déverrouillage de celui-ci, notamment d'un rotor à suspension magnétique d'un volant d'inertie.

L'invention s'applique plus particulièrement aux technologies spatiales, et encore plus particulièrement pour la commande d'attitude de satellites artificiels, par exemple de satellites en orbite terrestre, géostationnaire ou non.

Dans le cadre de l'invention, le terme "volant d'inertie" doit être compris dans son sens le plus général. Il concerne tous dispositifs tournant à grande vitesse tels que gyroscope, roue de réaction, roue ou volant d'inertie, etc.

Pour fixer les idées, sans que cela limite en quoi que ce soit la portée de l'invention, on se placera dans ce qui suit dans le cas de l'application préférée de l'invention, à savoir la commande d'attitude d'un satellite.

Pour commander l'attitude des satellites, on utilise généralement système à roue de réaction ou à volant d'inertie.

Un tel système comprend trois parties principales, à savoir un stator assujetti à un bâti ou châssis, lui-même fixé dans le satellite, un rotor tournant, à grande vitesse, autour d'un axe et des moyens d'entraînement en rotation la partie tournante, c'est-à-dire le rotor.

Dans les systèmes les plus anciens, le rotor tournait autour d'un axe matériel, c'est-à-dire d'un arbre de rotation à billes ou d'un organe similaire.

Dans les systèmes les plus récents, on recourt à une technique plus avantageuse mettant en oeuvre une suspension à palier magnétique et/ou électromagnétique asservi.

La partie tournante, c'est-à-dire le rotor, est espacée (garde) du stator typiquement d'une fraction de millimètre en fonctionnement normal.

L'avantage principal apporté par cette technique est trouvé dans le fait que le rotor "flotte" et donc tourne en lévitation magnétique sans contact avec le stator.

Les frottements sont *a priori* inexistants ou pour le moins extrêmement faibles. Il s'ensuit que les pertes dues aux frottements sont également extrêmement faibles et l'usure virtuellement nulle.

En outre, et contrairement aux systèmes mettant en oeuvre des arbres de rotation à billes, ils ne présentent pas des effets néfastes résultant de la lubrification nécessaire de ce type d'organes : dégradation dans le temps, notamment pour les missions à longue durée, sensibilité aux très basses températures subies pendant des périodes très longues et/ou à des variations rapides et très importantes de température.

On peut également signaler que les systèmes à suspension magnétique présente des niveaux de micro-vibration ainsi que des niveaux d'émission de bruit très faibles, ce qui est très favorable, notamment pour des missions scientifiques ou d'observation de la terre.

Jusqu'à une période récente, de tels systèmes, de taille relativement importante, étaient utilisés, ce malgré l'intérêt qu'ils présentent, seulement pour des missions de longue durée et étaient embarqués dans des satellites, également de grandes dimensions. Des progrès, notamment dans la miniaturisation et la grande intégration des circuits électroniques nécessaires pour l'asservissement précité, ont permis d'en réduire fortement la taille et d'autoriser leur intégration dans un satellite de petite taille, notamment pour des missions courtes.

A titre d'exemple non exhaustif, un volant à suspension magnétique est décrit dans l'article de Michael Scharfe et al., paru dans "Proc. 9th European Space Mechanisms and Tribology Symposium", intitulé : "THE CHALLENGES OF MINIATURISATION FOR MAGNETIC BEARING WHEEL", ESA-SP-480, 19-21 septembre 2001, pages 17-24. Cet article fait référence notamment à des travaux menés à l'Université de Technologie de Dresde ("Institute of Precision Engineering"). On pourra se reporter avec bénéfice à cet article pour une description plus détaillée, notamment par référence à la figure 3 qui illustre schématiquement un exemple de suspension magnétique.

Malgré les avantages qui viennent d'être rappelés, les systèmes à suspension magnétique présentent au moins un inconvénient.

En effet, le rotor n'est pas lié rigidement au stator, mais au contraire peut se déplacer librement, tant parallèlement et qu'orthogonalement, à son axe de rotation, même si ces déplacements sont d'amplitudes limitées. Il s'ensuit que seules les forces (électro)magnétiques qui s'exercent sur le rotor le maintiennent dans une position spatiale appropriée et empêche tout contact avec le stator. En l'absence de ces forces, le risque existe de détérioration des différents organes, statiques ou en rotation.

Aussi, on prévoit généralement un palier mécanique de secours pour permettre la mise en appui du rotor sur le stator sans que les organes magnétiques de suspension ne soient en contact mécanique lorsque le rotor n'est pas suspendu magnétiquement.

Cependant, lorsque le système est soumis à des contraintes importantes, comme par exemple lors de la phase de lancement d'un satellite (vibrations intenses, accélérations, etc.), le palier mécanique de secours précité n'est pas suffisant pour subir sans dommages les effets de ces contraintes, étant entendu en outre que, pendant cette phase, la suspension magnétique ne peut être mise en fonctionnement.

Aussi, il est nécessaire de prévoir des organes additionnels assurant un verrouillage complet du rotor par rapport au stator. Dans d'autres circonstances, il est également nécessaire de verrouiller le rotor, notamment lorsque le système est transporté ou manipulé.

Ce verrouillage doit naturellement n'être que temporaire. Notamment après la phase de lancement ou lorsqu'on désire effectuer des tests ou essais sur le système pour s'assurer de son bon fonctionnement, il est nécessaire de déverrouiller le rotor et d'initier une phase de fonctionnement que l'on qualifiera de "normal" (suspension magnétique).

Pour ce faire, différentes solutions ont été proposées dans l'art connu. La plupart de ces solutions reposent sur la présence dans le système d'un composant que l'on qualifiera de "consommable", c'est-à-dire à usage unique. C'est ce composant qui permet le verrouillage temporaire du rotor par rapport au stator. On comprend aisément que cette solution présente un inconvénient majeur. Il est en effet nécessaire de le remplacer après chaque usage.

Lorsqu'il a joué son rôle, après la phase de lancement du satellite et mise en orbite, il n'est plus utile. Dans ce contexte, qu'il soit à usage unique ne représente pas, *a priori*, un inconvénient majeur. On doit cependant noter que certaines précautions doivent être prises, car le composant précité ne doit pas interférer avec le fonctionnement normal du système (phase de suspension magnétique).

En outre et surtout, le système subit habituellement un certain nombre d'essais au sol, et des manipulations intermédiaires. Après chacune de ces phases de test, il est donc nécessaire de remplacer le composant à usage unique. Cela entraîne aussi habituellement des opérations de maintenance spécifiques qui vont au-delà de simples commandes électriques/électroniques.

Dans ce qui suit, on va rappeler brièvement quelques-unes des principales solutions proposées.

Le brevet US 4 345 485 (Jean-Luc Livet et al.) décrit un mécanisme de verrouillage selon lequel la retenue du rotor est réalisée en éliminant temporairement la garde axiale entre ce rotor et un palier mécanique de secours du volant d'inertie. Le système comprend deux paliers de secours présentant une portée conique pouvant venir en contact mécanique avec une portée conique complémentaire réalisée sur le rotor. Une des portées complémentaires peut être rendue mobile axialement. Pour ce faire, on lie de façon manuelle cette portée à un guide coulissant axialement. En orbite, pour libérer le rotor, on coupe le guide à l'aide d'une cisaille commandée par une charge pyrotechnique. Un ressort agit sur le rotor pour assurer sa rétractation. Il s'agit donc d'un dispositif de verrouillage temporaire à action axiale.

Le brevet US 4 566 740 (Jean F. Beau et al.) décrit un mécanisme de verrouillage dans lequel un câble axial est utilisé pour éliminer directement la garde axiale d'une roue cinétique. Le rotor est plaqué sur la surface d'un palier de secours et est bloqué. La libération du rotor est effectuée en coupant le câble par une charge pyrotechnique. Il s'agit là encore d'un dispositif de verrouillage temporaire à action axiale.

Le brevet US 4 872 357 (Hubert Vaillant de Guelis et al.) décrit un mécanisme de verrouillage utilisant un câble formant une boucle annulaire dans un plan transversal à l'axe de rotation du rotor. Le câble agit radialement sur une pluralité de portées élémentaires radialement mobiles liées au stator. Le rotor comporte une seconde portée radiale et s'engage, sous l'action de forces radiales dans les portées du stator et est bloqué. La libération du rotor est obtenue à l'aide d'une coupe-câble. Il s'agit là d'un dispositif de verrouillage temporaire à action radiale.

Comme on peut le constater aisément tous ces mécanismes sont à usage unique et présentent donc les inconvénients qui ont été rappelés.

On connaît également un mécanisme à usage multiple.

L'article de U. Bichler et T. Eckardt, intitulé : "A Gimbaled Low Noise Momentum Wheel", paru dans "27th Aerospace Mechanisms Symposium", "NASA Conference Publication 3205", 12-14 mai, 1993, page 196, décrit une roue d'inertie à suspension magnétique comportant un mécanisme de verrouillage de rotor pneumatique radial. Celui-ci comprend deux tubes de caoutchouc comme le montre plus particulièrement la figure 4. Le mécanisme assure le verrouillage du rotor par gonflage des tubes avec du gaz sous pression. En orbite, le rotor est libéré à l'aide de valves actionnées par des solénoïdes. Ce mécanisme à usage multiple contient le rotor, lors des phases de lancement et lors des phases précédant les tests, dans une position de sécurité.

*A priori*, on pourrait penser que ce mécanisme résout le problème de l'usage multiple. Il ne nécessite pas de composant à usage unique.

Cependant, l'expérience montre qu'il n'est pas sans inconvénient. En effet, d'une part, les tubes doivent être remplis de nouveau après chaque déverrouillage du rotor, et d'autre part, après de longue période de stockage, on est amené à constater le plus souvent que l'on doit également procéder à un nouveau remplissage, les tubes s'étant dégonflés du fait de fuites résiduelles.

L'invention vise à pallier les inconvénients des dispositifs de verrouillage temporaires de rotor de l'art connu, et dont certains viennent d'être rappelés.

L'invention se fixe pour but un dispositif de verrouillage temporaire de rotor à suspension magnétique permettant des opérations répétées de verrouillage/déverrouillage de ce rotor, sans exiger la présence de composants à usage unique.

Pour ce faire, selon une première caractéristique importante, le dispositif de verrouillage temporaire de rotor selon l'invention tire partie des propriétés d'un mécanisme dit "mouvement de Genève", couramment utilisé en horlogerie.

A titre d'exemple non exhaustif, un tel mécanisme est décrit et illustré succinctement dans l'encyclopédie "Encyclopedia Britannica", sous l'entrée "Geneva mechanism".

Le mécanisme dit de Genève permet d'obtenir un mouvement de rotation intermittent qui se caractérise par des périodes alternées de rotation et de repos, ce sans inversion de direction. Ce mécanisme est également utilisé pour obtenir un indexage, c'est-à-dire la rotation autour d'un angle d'amplitude prédéterminée.

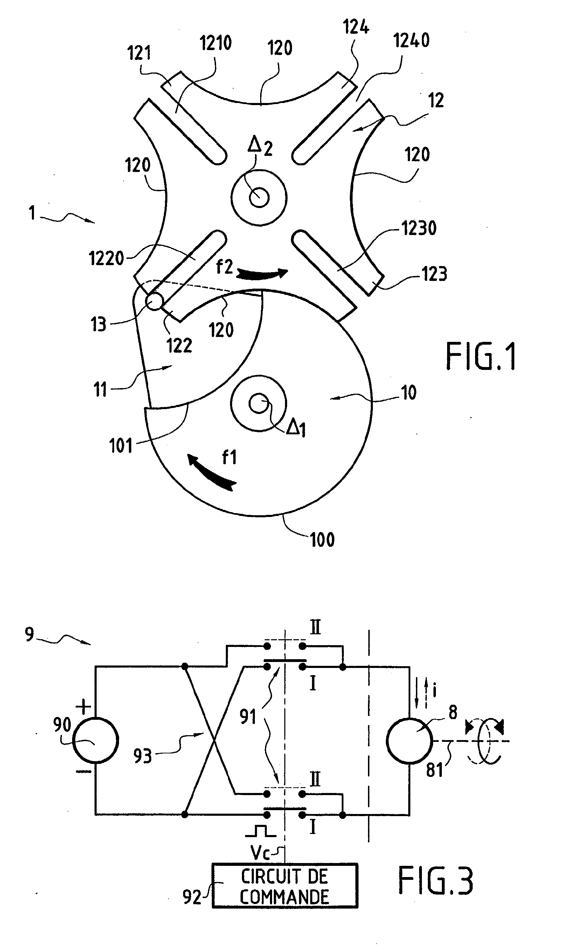

La figure 1 annexée à la présente description illustre schématiquement un exemple de réalisation d'un mécanisme à mouvement de Genève 1.

Ce mécanisme comporte deux parties principales : une came d'entraînement 10 inscrite dans un cercle et tournant autour d'un premier axe Δ₁, par exemple dans le sens des aiguilles d'une montre : flèche f₁, et une croix dite "de Malte" 12. Cette dernière comporte un certain nombre de branches, typiquement quatre, 121 à 124, et peut tourner autour d'un second axe de rotation Δ₂, parallèle au premier Δ₁.

La came 10 est entraînée en rotation par un moteur ou un organe similaire (non représenté).

La croix de Malte 12 présente une configuration telle, qu'entre chaque branche, 121 à 124, elle ait la forme d'un arc de cercle 120 (surface concave) complémentaires du cercle (périphérie 100) dans lequel est inscrite la came 10. La came 10 et la croix de Malte 12 sont agencées dans l'espace de manière à ce que les surfaces périphériques complémentaires respectives, 100 et 120, soient engagées l'une dans l'autre.

La came 10 comporte également une zone creuse en périphérie : surface concave circulaire 101. Cette disposition permet une rotation de la croix de Malte 12 autour de l'axe Δ₂, les bras, 121 à 124, peuvent s'engager à tour de rôle dans cette zone creuse 101.

Pour entraîner la croix de Malte 12 en rotation, on adopte les dispositions supplémentaires suivantes : les bras, 121 à 124, comportent des fentes radiales (par rapport à l'axe Δ₂), 1210 à 1240, et la came 10 entraîne elle-même un bras 11 dont l'extrémité est munie d'un doigt 13, perpendiculaire à la surface du bras 11. Le bras 11 et le doigt 13 sont agencés de manière à ce que ce dernier s'engage dans l'une ou l'autre des fentes, 1210 à 1240. La came 10 continuant à tourner autour de l'axe Δ₁ dans le sens de la flèche f₁, le doigt 13 glisse sur la paroi d'une des fentes, par exemple la fente 1220 sur la figure 1, et entraîne en rotation la croix de Malte 12 autour de l'axe Δ₂, jusqu'à ce qu'il ressorte de la fente 1220. La rotation de la croix de Malte 12 s'effectue suivant la flèche f₂, c'est-à-dire dans le sens inverse des aiguilles d'une montre dans l'exemple décrit.

Du fait des diverses dispositions qui ont été retenues, notamment de la présence des surfaces concaves 120, pour un sens de mouvement donné de la came 10, la croix de Malte 12 tourne en sens contraire et ne peut pas revenir en arrière, même si la came 10 s'arrête de tourner.

Après une révolution complète de la came autour de l'axe Δ₁, le doigt 13 s'engage dans la fente suivante, 1210 dans l'exemple, la croix de Malte 12 ayant tournée de 90°, et le cycle qui vient d'être décrit se reproduit. On obtient donc un mouvement de rotation intermittent, même si la came 10 tourne de façon régulière. L'amplitude angulaire dépend du nombre de fentes, 1210 à 1240. Toujours dans l'exemple décrit, la croix de Malte 12 effectue une révolution complète pour quatre révolutions de la came 10.

Comme il a été rappelé, l'invention tire avantageusement partie de la propriété "d'irréversibilité" du mouvement de rotation de la croix de Malte. Le concept "d'irréversibilité" doit naturellement s'entendre pour un sens de rotation donné de la came d'entraînement 10 car, précisément, si le mouvement de rotation est inversé, la croix de Malte 12 va être entraînée en sens inverse.

L'invention tire également partie de cette propriété complémentaire comme il va l'être montré.

Aussi, le dispositif de verrouillage temporaire de rotor selon l'invention comprend un mécanisme à mouvement de Genève entraîné par un actionneur électrique, par exemple un moteur électrique à courant continu. Le mécanisme à mouvement de Genève supporte une pièce annulaire et est couplé à un organe à vis, par exemple une vis à bille solidaire du bâti, via un écrou. La vis transforme le mouvement de rotation en mouvement complexe présentant une composante linéaire suivant une direction parallèle à l'axe de rotation du rotor.

De ce fait, suivant le sens de rotation du moteur, la pièce annulaire est entraînée en translation dans un sens ou un autre, ce qui permet de la rapprocher ou de l'éloigner du rotor. Dans le premier cas, on peut mettre la pièce annulaire en contact avec le rotor, puis l'entraîner vers une paroi fixe et obtenir une position de verrouillage auto-bloquant de celui-ci.

La libération ou déverrouillage s'obtient tout aussi simplement par inversion du sens de rotation du moteur.

Dans un mode de réalisation préféré, la pièce annulaire est munie d'une membrane élastique qui forme partie intégrante avec elle et exerce une force dite de pré-charge sur le rotor.

Toujours dans un mode de réalisation préféré, les zones périphériques du rotor et de la pièce annulaire présentent des portées coniques complémentaires qui s'emboîtent l'une dans l'autre.

L'invention a donc pour objet principal un dispositif de verrouillage temporaire d'un rotor du type à suspension magnétique d'un volant d'inertie ou similaire, ledit volant d'inertie comprenant un stator assujetti à un châssis et ledit rotor tournant autour d'un axe de rotation, caractérisé en ce que ledit dispositif de verrouillage temporaire comprend un mécanisme à mouvement dit de Genève couplé à un actionneur activé par une source d'énergie et susceptible de l'entraîner sélectivement suivant des premier et second sens de rotation, en ce que le dit mécanisme à mouvement de Genève comprend un organe d'entrée du type à came couplé au dit actionneur, un organe de sortie du type à croix dite de Malte, possédant un axe de symétrie commun au dit axe de rotation et tournant autour de cet axe, en ce que ladite croix de Malte supporte une pièce annulaire et est couplée à des moyens à vis, coaxiaux au dit axe de rotation et transformant ledit mouvement de rotation en un mouvement complexe comportant une composante linéaire, de manière à entraîner ladite pièce annulaire en un mouvement de translation le long dudit axe de rotation et à ce que, lorsque ladite croix de Malte est animée d'un mouvement de rotation d'un premier sens, la dite pièce annulaire se rapproche dudit rotor jusqu'à ce qu'un contact mécanique soit établi et l'entraîne en translation jusqu'à obtenir un blocage de type auto-bloquant contre une paroi fixe, de façon à obtenir ledit verrouillage, et à ce que lorsque ladite croix de Malte est animée d'un mouvement de rotation d'un sens inverse, la dite pièce annulaire libère ledit rotor, de façon à obtenir un déverrouillage de celui-ci.

L'invention concerne également l'application d'un tel dispositif à un volant d'inertie pour la commande d'attitude d'un satellite artificiel.

L'invention va maintenant être décrite de façon plus détaillée en se référant aux dessins annexés, parmi lesquels :
- la figure 1 illustre schématiquement un exemple de réalisation d'un mécanisme à mouvement dit de Genève ;
- la figure 2A illustre schématiquement, en coupe transversale, en vue de côté, un volant d'inertie à rotor du type à suspension magnétique comprenant dispositif de verrouillage temporaire de rotor selon un mode de réalisation préféré de l'invention ;
- la figure 2B illustre schématiquement, en coupe et en vue de dessus, le dispositif de la figure 2A ;
- la figure 2C illustre un détail de la figure 2B ;
- la figure 2D illustre en perspective partielle un dispositif conforme aux figures 2A à 2C ; et
- la figure 3 illustre schématiquement un circuit de commande et d'alimentation en énergie électrique mis en oeuvre dans le dispositif de la figure 2.

Dans ce qui suit, sans en limiter en quoi que ce soit la portée, on se placera ci-après dans le cadre de l'application préférée de l'invention, sauf mention contraire, c'est-à-dire dans le cas d'un dispositif de verrouillage temporaire de rotor permettant des opérations répétées de verrouillage/déverrouillage du rotor à suspension magnétique pour volant d'inertie ou similaire embarquée la commande d'attitude d'un satellite artificiel.

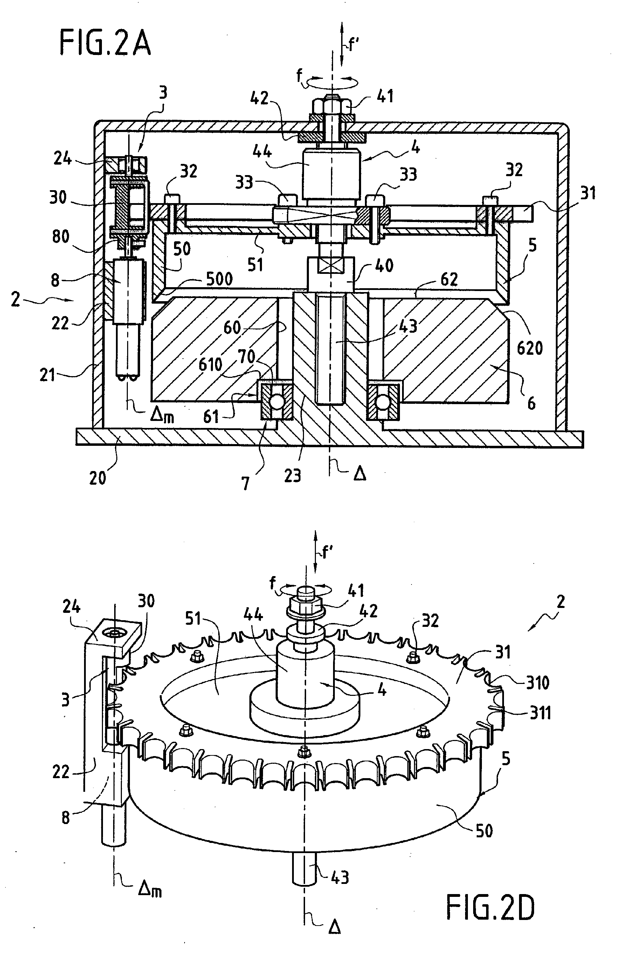

On va maintenant décrire, par référence aux figures 2A à 3, un mode de réalisation préféré d'un dispositif selon l'invention.

Sur ces figures, les éléments identiques portent les mêmes références et ne seront re-décrits qu'en tant que de besoin.

La figure 2A illustre, en coupe et en vue de côté, un volant d'inertie à rotor du type à suspension magnétique comprenant un dispositif de ce type. Sur cette figure, on n'a représenté que les éléments nécessaires à la bonne compréhension de l'invention. On doit bien comprendre que le volant d'inertie et ses différents composants ne diffèrent pas de l'art connu, le dispositif selon l'invention, et cela constitue un avantage supplémentaire, étant entièrement compatible avec les systèmes de l'art connu. Seules les dispositions spécifiques à l'invention et les interactions entre le dispositif de verrouillage temporaire de rotor et les autres organes du volant d'inertie sont explicitement décrites. A titre d'exemple, les organes assurant l'entraînement du rotor et sa suspension magnétique, le stator en tant que tel, et les circuits de commande et régulation n'ont pas été représentés. Pour une description plus complète des composants et circuits d'un rotor à suspension magnétique, on pourra se reporter avec profit, par exemple, à l'article de Michael Scharfe et al. précité.

Le système complet 2, c'est-à-dire le volant d'inertie comprend un socle 20 et un châssis 21 qui enferme les éléments constitutifs classiques d'un tel système, notamment un rotor à suspension magnétique 6, à symétrie de révolution. Celui-ci comporte un canal central cylindrique 60 et est enfilé sur un arbre matériel 23 solidaire du socle 20 et d'axe de symétrie Δ, constituant l'axe de rotation du rotor 6.

Dans l'exemple décrit, la partie inférieure de l'arbre 23 est munie d'un palier mécanique de secours 7. La face du rotor 6, en vis-à-vis avec ce palier 7, comporte une découpe cylindrique 61 de forme appropriée pour que le rotor 6 puisse être au moins partiellement enfilé sur palier 7, le diamètre intérieur de la découpe 61 étant toutefois légèrement supérieure au diamètre extérieur de le palier 7, de manière à ce que, en fonctionnement normal (suspension électromagnétique), le rotor 6 ne soit pas en contact mécanique avec le palier 7. En d'autres termes, cette disposition permet de préserver une garde typique de quelques fractions de millimètres, comme précédemment indiqué, et permet le flottement libre du rotor 6.

Dans l'exemple décrit sur la figure 2A, le rotor 6 est représenté en position opérationnelle, c'est-à-dire déverrouillé.

Ces dispositions sont, en soi, communes à l'art connu.

Selon une première caractéristique importante de l'invention, le dispositif de verrouillage/déverrouillage du rotor 6 comprend un mécanisme à mouvement de Genève, représenté sous la référence générale 3. Ce dernier est entraîné par un actionneur électrique 8, de préférence un moteur à courant continu. Le moteur 8 entraîne un organe d'entrée 30, de façon avantageuse via un jeu d'engrenages 80, de rapport déterminé. Ce moteur est alimenté, de façon classique en soi, par un générateur d'énergie électrique et des circuits de commande qui n'ont pas été représentés sur la figure 2A.

Le mécanisme à mouvement de Genève 3 fonctionne de façon très similaire à ce qui a été décrit en regard de la figure 1 et il est inutile de redécrire entièrement son fonctionnement.

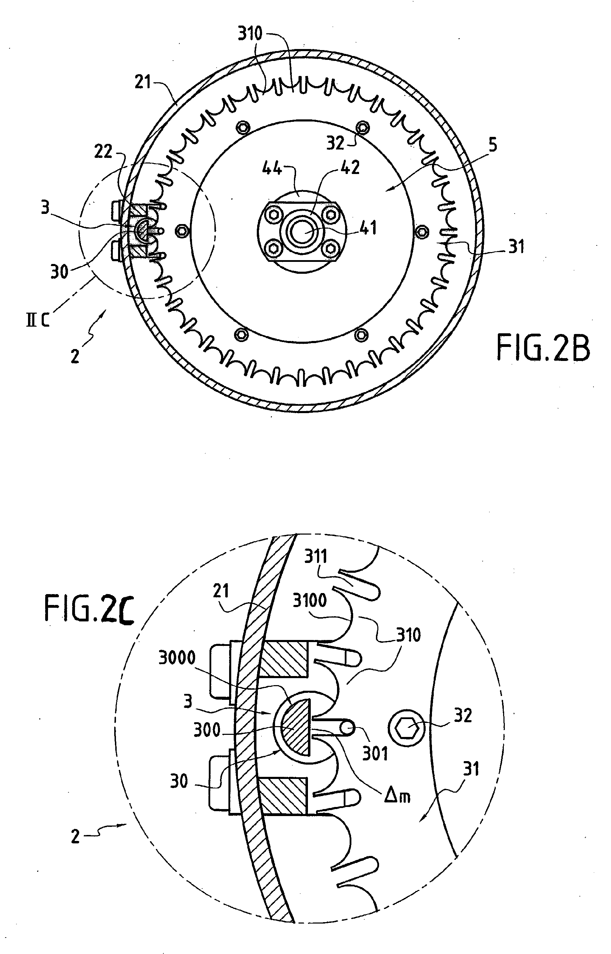

La figure 2B (en coupe et vue de dessus), et plus particulièrement la figure 2C illustrant un détail de la figure 2B, ainsi que la figure 2D (perspective partielle), illustrent de façon plus précise les organes principaux de ce mécanisme.

Il comprend un organe d'entrée 30, comportant une came 300 (similaire à la came 10 de la figure 1), entraînant en rotation une croix de Malte 31. Dans l'exemple décrit, la croix de Malte 31 est constituée par une couronne dentée. Toujours dans l'exemple décrit, et pour fixer les idées, la croix de Malte 31 comprend 36 dents 310. Les surfaces internes 3100, entre deux dents 310 de la couronne, et externe 3000 de la came 300 sont complémentaires (avantageusement circulaires).

Les dents sont munies fentes radiales 311.

L'organe d'entrée 30 supporte un doigt 301 perpendiculaire au plan de la came 300. celui-ci, comme dans le cas du dispositif de l'art connu (figure 1) s'engage dans les fentes 311 à tour de rôle et peut faire tourner la couronne de la croix de Malte par incrément d'un 1/36 ième de tour pour un tour complet de l'organe d'entrée 30 autour de son axe de rotation Δₘ.

La rotation de la croix de Malte 31 s'effectue autour d'un axe commun avec l'axe Δ, axe de rotation du rotor 6.

Le moteur 8 et l'organe d'entrée 30 sont rendus solidaires du châssis 21 et reposent sur des supports, 22 et 24, respectivement.

Selon une autre caractéristique importante de l'invention, la croix de Malte 31 est couplée mécaniquement à un organe fileté, sous la référence générale 4, comprenant de préférence une vis à billes 40. Cette dernière est munie d'un arbre 43 solidaire de l'arbre 23, en son extrémité inférieure (sur la figure 2) et assujettie au châssis 21, en son extrémité supérieure, par tout moyen approprié, écrou 41 ou autre. Le couplage mécanique avec la croix de Malte 31 est effectué à l'aide, par exemple, d'un écrou rotatif 44, fixé dans la partie centrale de la croix de Malte 31 à l'aide de vis 33 ou d'organes similaires, et vissé sur la partie filetée de la vis à billes 4.

La croix de Malte 31 est liée mécaniquement à une pièce annulaire 5, en forme de cloche, à l'aide de vis 32 ou d'organes similaires. Cette pièce 5 est disposée (sur la figure 2A) en dessous de la croix de Malte 31.

Lorsque la croix de Malte 31, entraînée en rotation par l'organe d'entrée 30 (via la came 300 et le doigt 301), tourne autour de l'axe Δ, elle entraîne à son tour dans ce mouvement de rotation la pièce annulaire 5, d'une part, et l'écrou 4, d'autre part. Ce dernier transforme le mouvement de rotation de l'ensemble "croix de Malte 31 - pièce annulaire 5" (flèche *f*) en un mouvement complexe possédant une composante linéaire de translation selon l'axe Δ (flèche *f*). Le sens du mouvement de translation dépend du sens de rotation de la croix de Malte 31, donc du sens de rotation du moteur 8.

Dans un premier sens de rotation du moteur 8 et de la croix de Malte 31, l'écrou 4 est entraîné vers le bas (sur la figure 2A), de sorte que la pièce annulaire 5 se rapproche, dans un premier temps du rotor 6, puis, dans un deuxième temps, rentre en contact mécanique avec celui-ci, exerce une force de poussée vers le bas, et dans un dernier temps le bloque contre une surface d'appui solidaire du châssis du volant d'inertie 2.

Dans l'exemple décrit sur la figure 2A, la paroi supérieure 610 de la découpe 61 du rotor 6 est plaquée contre la paroi supérieure 70 du palier de secours 7. Lorsque le moteur 8 n'est plus alimenté en énergie électrique, du fait de la propriété rappelée de non-réversibilité du mécanisme à mouvement de Genève 3, un verrouillage auto-bloquant du rotor 6 est obtenu, ce sans dépense d'énergie.

Dans un mode de réalisation préféré, la périphérie de la face supérieure 62 du rotor 6 et le bas de la paroi cylindrique 50 de la pièce annulaire 5 sont dotés de portées coniques complémentaires, 620 et 500, respectivement, ce qui facilite le positionnement relatif de ces deux éléments et un verrouillage positif lors de la mise en contact mécanique pendant le mouvement de translation précité.

En outre, toujours dans un mode de réalisation préféré, on prévoit des moyens élastiques formant partie intégrale de la pièce annulaire 5. Dans l'exemple décrit, les moyens élastiques sont obtenus en dotant la pièce annulaire 5 et notamment sa paroi supérieure 51 d'une forme adaptée qui lui donne des propriétés de membranes élastiques. Cette membrane élastique 51 permet d'exercer une force de poussée préliminaire ou "pré-charge" s'exerçant sur le rotor 6 et se déforme progressivement.

Naturellement, d'autres dispositions permettant d'obtenir un résultat analogue peuvent être prises sans sortir du cadre de l'invention.

Comme il vient d'être indiqué, de façon avantageuse, en particulier pour des paliers de secours de petites dimensions (ce qui constitue une des applications préférées de l'invention) la contre-surface d'appui pour le verrouillage est constituée directement par le palier de secours 7. En effet, ce dernier peut soutenir des forces axiales importantes tout en continuant à tourner. Il facilite de ce fait l'application d'une force de prè-charge d'amplitude prédéterminée pour une application donnée, force associée à la rotation de la pièce annulaire 5.

Le contact mécanique assurant le verrouillage du rotor 6 en fin de course de la pièce annulaire 5 peut être réalisé par un autre moyen que le palier de secours 7, sans sortir du cadre de l'invention.

Dans une variante non représentée, il suffit de prévoir une surface solidaire du support 20 en matériau à faible coefficient de friction, ou pour le moins revêtue d'un tel matériau, que l'on pourra appeler contre-surface "statique".

A titre d'exemple non limitatif, on peut prévoir de revêtir la surface supérieure (figure 2A) du socle 20 d'un film de faible épaisseur à base de PTFE ou d'appliquer un revêtement de Molybdène Disulfide (MoS₂)

En sens inverse, la libération du rotor 6 (c'est-à-dire son déverrouillage) peut être obtenue simplement en inversant le sens de rotation du moteur 8. Celui-ci entraîne de façon corrélative la croix de Malte 31 dans un mouvement de rotation opposé au précédent. Il s'ensuit que l'ensemble "croix de Malte 31 - pièce annulaire 5" entraîné par la rotation de l'écrou 42 est animé d'un mouvement de rotation (*f*), mais aussi de translation (*f*') qui le rapproche de la paroi supérieure du châssis 21 jusqu'à ce que l'écrou 44 vienne en contact mécanique avec une butée 42 solidaire de cette paroi. Pendant ce mouvement de translation, inverse du premier, la pièce annulaire 5 relâche la force de poussée exercée sur le rotor 6, puis s'éloigne de celui-ci. Le rotor 6 est donc libéré, reprend une position opérationnelle (suspension magnétique) et on obtient un déverrouillage complet.

On constate que l'on peut obtenir à volonté des verrouillages/déverrouillages multiples simplement en inversant le sens du courant dans le moteur 8. Ces opérations ne nécessitent ni composant à usage unique, ni n'exigent une interaction humaine et/ou des opérations complexes et coûteuses de maintenance.

Un circuit de commande simple permet d'obtenir le fonctionnement souhaité. La figure 3 illustre schématiquement un circuit 9 de commande et d'alimentation en énergie électrique du moteur 8. Celui-ci comprend essentiellement un générateur 90 de tension continue, un commutateur double 91 à deux positions, I (traits pleins) et II (pointillés), permettant grâce à un croisement de conducteurs connexions 93 d'inverser la polarité de l'alimentation en énergie électrique du moteur 8 et à ce qu'un courant *i* circule dans un premier sens (flèche pleine) ou dans un second sens opposé au premier, entraînant de ce fait une rotation de l'arbre moteur 81 dans le sens des aiguilles d'une montre ou dans le sens contraire, respectivement. Des circuits électroniques de commande 92 délivrent un signal V_{C} pour la commande du commutateur à deux états 91. Le commutateur 91, bien que représenté sous la forme d'un commutateur galvanique peut naturellement être avantageusement réalisé sous la forme d'un commutateur à semi-conducteur. De façon classique en soi, les circuits de commandes 92 peuvent être placés sous le contrôle d'un ordinateur de bord à programme enregistré qui impose la chronologie des opérations de verrouillage/déverrouillage à des instants appropriés. A titre d'exemple, un signal radioélectrique de télécommande peut être émis à partir d'une base terrestre pour initier le déverrouillage après la phase de lancement du satellite.

A la lecture de ce qui précède, on constate aisément que l'invention atteint bien les buts qu'elle s'est fixés.

Elle permet, comme il vient d'être montré, des opérations multiples de verrouillage/déverrouillage, sans intervention humaine ni nécessité de maintenance. Le surcoût des circuits et composants nécessaires pour obtenir ce fonctionnement avantageux est négligeable. Il doit être de toute façon remarqué qu'un tel dispositif est nécessaire et que les dispositifs de l'art connu entraînent des coûts plus importants, puisqu'ils exigent la mise en oeuvre de composants à usage unique et/ou des interventions de maintenance coûteuses. D'autre part le dispositif n'apporte aucune complexité particulière de fonctionnement.

Il doit être clair cependant que l'invention n'est pas limitée aux seuls exemples de réalisations explicitement décrits, notamment en relation avec les figures 2A à 3. Il n'est pas limité non plus à la seule application d'un volant d'inertie pour la commande de l'attitude d'un satellite artificiel.

## Revendications

1. Dispositif de verrouillage temporaire d'un rotor du type à suspension magnétique d'un volant d'inertie ou similaire, ledit volant d'inertie comprenant un stator assujetti à un châssis et ledit rotor tournant autour d'un axe de rotation, **caractérisé en ce que** ledit dispositif de verrouillage temporaire comprend un mécanisme à mouvement dit de Genève (3) couplé à un actionneur (8) activé par une source d'énergie (90) et susceptible de l'entraîner sélectivement suivant des premier et second sens de rotation, **en ce que** le dit mécanisme à mouvement de Genève (3) comprend un organe d'entrée (30) du type à came couplé au dit actionneur (8), un organe de sortie du type à croix dite de Malte (31), possédant un axe de symétrie commun au dit axe de rotation (Δ) et tournant autour de cet axe (Δ), **en ce que** ladite croix de Malte (31) supporte une pièce annulaire (5) et est couplée à des moyens à vis (4), coaxiaux au dit axe de rotation (Δ) et transformant ledit mouvement de rotation (f) en un mouvement complexe comportant une composante linéaire (f'), de manière à entraîner ladite pièce annulaire (5) en un mouvement de translation le long dudit axe de rotation (Δ) et à ce que, lorsque ladite croix de Malte (31) est animée d'un mouvement de rotation d'un premier sens, la dite pièce annulaire (5) se rapproche dudit rotor (6) jusqu'à ce qu'un contact mécanique soit établi et l'entraîne en translation jusqu'à obtenir un blocage de type auto-bloquant contre une paroi fixe (70), de façon à obtenir ledit verrouillage, et à ce que lorsque ladite croix de Malte (31) est animée d'un mouvement de rotation d'un sens inverse, la dite pièce annulaire (5) libère ledit rotor (6), de façon à obtenir un déverrouillage de celui-ci.

2. Dispositif selon la revendication 1, **caractérisé en ce que** lesdits moyens à vis (4) comprennent une vis à bille (40) comportant un arbre (43), dit inférieur, coaxial au dit axe de rotation (Δ), solidaire en une première extrémité dudit châssis (20, 21), et assujettie en une seconde extrémité à ce même châssis (20, 21), **en ce que** ledit rotor (6) est enfilé autour dudit arbre (43) et tourne librement autour de celui-ci, et **en ce qu'**un écrou (44) solidaire (33) de ladite croix de Malte (31) est vissé sur ladite vis à bille (40), de manière à transformer ledit mouvement de rotation (f) autour dudit axe de rotation (Δ) en un mouvement complexe présentant ladite composante linéaire (f').

3. Dispositif selon les revendications 1 ou 2, **caractérisé en ce que** ledit actionneur est un moteur électrique à courant continu (8) alimenté par une source d'énergie électrique (90) via des circuits de commande (92) et de commutation (91), de manière à inverser sélectivement la polarité de l'alimentation en énergie électrique dudit moteur (8) et à obtenir sélectivement une rotation dans le sens des aiguilles d'une montre ou dans le sens inverse, respectivement, le moteur électrique (8) entraînant la rotation (f) corrélative de ladite croix de Malte (31) dans un sens ou un autre autour dudit axe de rotation (Δ) et sa translation (f') le long de cet axe de rotation (Δ), pour obtenir les verrouillage et déverrouillage du rotor (6), respectivement.

4. Dispositif selon l'une quelconque des revendications 1 à 3, **caractérisé en ce que** ladite pièce annulaire (5) a la forme d'une cloche à paroi cylindrique (50) et **en ce que** l'extrémité de ladite paroi cylindrique (50) et la périphérie de la face (62) du rotor (6) en vis-à-vis sont dotés de portées coniques complémentaires (500, 620) s'engageant l'une dans l'autre lors de ladite mise en contact mécanique dudit rotor (6) et de ladite pièce annulaire (5).

5. Dispositif selon la revendication 4, **caractérisé en ce que** ladite pièce annulaire (5) intègre une membrane élastique (51) permettant d'exercer une force dite de pré-charge lors dudit rapprochement de ladite pièce annulaire (5) et dudit rotor (6) pour obtenir ledit verrouillage.

6. Dispositif selon l'une quelconque des revendications 1 à 5, **caractérisé en ce que**, ledit châssis (20, 21) comprenant en outre un palier mécanique (7) dit de secours, ladite paroi fixe de blocage dudit rotor (6) est constitué par une (70) des parois dudit palier mécanique de secours (7).

7. Dispositif selon l'une quelconque des revendications 1 à 5, **caractérisé en ce que** ladite paroi fixe de blocage dudit rotor (6) est en matériau à faible coefficient de friction.

8. Dispositif selon la revendication 7, **caractérisé en ce que** ledit matériau est à base d'un film de PTFE ou est constitué par un revêtement de Molybdène Disulfide.

9. Application d'un dispositif de verrouillage temporaire d'un rotor (6) du type à suspension magnétique selon l'une quelconque des revendications précédentes à un volant d'inertie (2) ou similaire pour la commande de l'attitude d'un satellite artificiel.
